# EUROPEAN PATENT APPLICATION

(11) **EP 2 960 606 A1**
(43) Date of publication of application: **30.12.2015**
(21) Application number: 13875571.5
(22) Date of filing: 25.02.2013
(51) Int. Cl.: F25J 1/00, C01B 31/20, F25J 3/04

(54) **CARBON DIOXIDE LIQUEFACTION DEVICE**

(71) Applicant: Mitsubishi Heavy Industries Compressor Corporation, Minato-ku Tokyo 108-0014 (JP)
(72) Inventor: HASHIZUME Kei, Hiroshima-shi Hiroshima 733-8553 (JP)
(74) Representative: Bongiovanni, Simone
(86) International application number: PCT/JP2013/054736
(87) International publication number: WO 2014/128959

(57) **Abstract**

The present invention is equipped with: a carbon dioxide liquefaction unit, which performs a heat exchange with a refrigerant (which is a portion of a cold heat source in the gaseous state that is used and manufactured in a cold heat source production plant), thereby liquefying carbon dioxide which has been separated and recovered from a gas containing carbon dioxide; and an energy recovery unit, which extracts energy and lowers the temperature of the gaseous refrigerant by expanding the gaseous refrigerant that has exchanged heat with the carbon dioxide in the carbon dioxide liquefaction unit. The energy recovery unit returns the gaseous refrigerant, the temperature of which has been lowered, to the cold heat source production plant.

## Description

### Technical Field

The present invention relates to a carbon dioxide liquefaction device which liquefies carbon dioxide.

### Background Art

In recent years, various techniques of removing carbon dioxide contained in an exhaust gas of a thermal power plant or the like in order to prevent global warming or the like have been proposed.

For example, PTL 1 discloses a technique of performing liquefaction and separation by increasing the concentration of the carbon dioxide contained in the exhaust gas by using an oxygen combustion boiler system in a coal-fired power plant or the like.

PTL 2 discloses a system of concentrating and recovering the carbon dioxide contained in the exhaust gas by using a carbon dioxide concentration action in a molten carbonate fuel cell while performing electric power generation in the molten carbonate fuel cell by using the carbon dioxide contained in the exhaust gas of a coal-fired power plant. Further, in PTL 2, as a method of separating the carbon dioxide from the exhaust gas, a chemical absorption method, a physical adsorption method, a membrane separation method, and a cryogenic separation method are described. Among them, with respect to the chemical absorption method, the physical adsorption method, and the membrane separation method, an expensive absorbent, an adsorbent, and a polymer membrane are required in order to separate carbon dioxide. Further, in the cases of the chemical absorption method, the physical adsorption method, and the membrane separation method, because of a restriction on an increase in the size of the system, the exhaust gas to be treated is limited.

With respect to the chemical absorption method, the physical adsorption method, and the membrane separation method described above, carbon dioxide is recovered as a gas. The carbon dioxide recovered as a gas is made to be in a high-pressure state when performing transportation or storage. As a method of obtaining the carbon dioxide in a high-pressure state, there is a method of increasing the pressure of recovered low-pressure gaseous carbon dioxide in a gaseous state, or a method of liquefying gaseous carbon dioxide in the middle of pressure-increasing and then increasing the pressure of the carbon dioxide with a pump. Energy for increasing pressure in a liquid is generally much smaller than energy for increasing pressure in a gas, and therefore, by increasing the pressure of liquefied carbon dioxide with a pump, it becomes possible to reduce energy.

However, when liquefying the above-described gaseous carbon dioxide, a large amount of energy for cooling the gaseous carbon dioxide is required, and therefore, it is desired to lower energy related to liquefaction of the gaseous carbon dioxide.

Therefore, in PTL 2 described above, a technique of attaining a reduction in energy related to the liquefaction of gaseous carbon dioxide by providing an absorption refrigerator which is driven by using exhaust heat of an exhaust gas of a fuel cell is proposed.

On the other hand, as a carbon dioxide recovery device for removing carbon dioxide in a coal gasification gas, there is a carbon dioxide recovery device using a chemical absorption method. However, also in the chemical absorption method, a large amount of carbon dioxide recovery power is required, and thus a situation in which improvement in the efficiency of the entire system is difficult is caused. Therefore, in PTL 3, a technique of liquefying carbon dioxide in a coal gasification gas by cooling the coal gasification gas by using liquid oxygen and liquid nitrogen produced by a cryogenic separation device for producing gaseous oxygen which is used for combustion in a gasification furnace is described.

Further, in a carbon dioxide liquefaction plant, a structure provided with a device for separating a synthesis gas stream which includes carbon dioxide and hydrogen into a hydrogen vapor stream and a liquid carbon dioxide stream is known. In such a carbon dioxide liquefaction plant, a further reduction of energy consumption is desired. Therefore, in PTL 4, in a gas-liquid separation system for cooling a synthesis gas having an increased pressure in a heat exchanger, thereby separating the synthesis gas into a high-pressure hydrogen vapor stream and liquid carbon dioxide, a technique of obtaining power of a compressor or the like by expanding the high-pressure hydrogen vapor stream by an expander and performing heat exchange between a hydrogen vapor stream with a temperature lowered by expansion and a synthesis gas stream is described.

### Citation List

### Patent Literature

[PTL 1] Japanese Unexamined Patent Application Publication No. 2009-270753
[PTL 2] Japanese Unexamined Patent Application Publication No. 2011-141967
[PTL 3] Japanese Unexamined Patent Application Publication No. 2010-184994
[PTL 4] PCT Japanese Translation Patent Publication No. 2011-529434

### Summary of Invention

### Technical Problem

Incidentally, among plants which are provided with an oxygen-blown gasification furnace or a boiler, in a plant which obtains high-pressure carbon dioxide by compressing gaseous carbon dioxide after separation and recovery of the carbon dioxide, the carbon dioxide is compressed by using a gas compressor. A large amount of compression power is required in order to compress the carbon dioxide into a gaseous state.

On the other hand, in a case where a cold heat source needed to liquefy the carbon dioxide is present, it is possible to cool and liquefy the carbon dioxide by using the cold heat source after recovered gaseous carbon dioxide is compressed to a liquefaction pressure, and compress the liquefied carbon dioxide to a required pressure with low power by a pump. For this reason, it is possible to attain a further reduction in power than in a case of using the gas compressor.

However, in general cooling water, a temperature is high, and thus it cannot be used as a cold heat source for liquefying recovered carbon dioxide. For this reason, in a case of increasing the pressure of liquid carbon dioxide with a pump, in order to obtain a low-temperature cold heat source, it is necessary to prepare a new cold heat source plant or use the existing cold heat source plant. However, in a case of manufacturing a cold heat source by preparing a new cold heat source plant, a large amount of manufacturing energy is required, and therefore, it is difficult to attain a reduction in power consumption. Also in a case of using the existing cold heat source plant, in general, a cold heat source necessary for the cooling of carbon dioxide is newly manufactured, and therefore, a large amount of energy is required, and thus it is difficult to attain a reduction in power consumption. In addition, even in a case where the cold heat source having been discarded in the existing cold heat source plant can be used as a cold heat source for liquefaction of carbon dioxide, recently, further energy saving has been desired.

The present invention has been made in view of the above circumstances and has an object to provide a carbon dioxide liquefaction device in which it is possible to attain a reduction in power consumption.

### Solution to Problem

A first aspect of a carbon dioxide liquefaction device according to the present invention includes: a carbon dioxide liquefaction unit which liquefies carbon dioxide separated and recovered from a gas containing carbon dioxide, by performing heat exchange with a portion of a cold heat source in a gaseous state, which is used and manufactured in a cold heat source production plant, as a refrigerant; and an energy recovery unit which expands a gaseous refrigerant having performed heat exchange with the carbon dioxide in the carbon dioxide liquefaction unit, thereby extracting energy and at the same time, lowering a temperature of the gaseous refrigerant, wherein the energy recovery unit returns the gaseous refrigerant having a lowered temperature to the cold heat source production plant.

In a second aspect of the carbon dioxide liquefaction device according to the present invention, the energy recovery unit in the first aspect may lower the temperature of the gaseous refrigerant to a temperature needed in order to use the gaseous refrigerant in the cold heat source production plant.

In a third aspect of the carbon dioxide liquefaction device according to the present invention, the cold heat source production plant in the first or second aspect may be provided with an air cryogenic separation unit which can separate raw material air into at least oxygen and nitrogen.

In a fourth aspect of the carbon dioxide liquefaction device according to the present invention, the air cryogenic separation unit in the third aspect may be provided with a heat exchange unit which performs heat exchange by using the gaseous refrigerant having a temperature lowered by the energy recovery unit.

In a fifth aspect of the carbon dioxide liquefaction device according to the present invention, in the carbon dioxide liquefaction device according to the fourth aspect, a plurality of sets of combinations of the energy recovery unit and the heat exchange unit may be provided to be connected in series.

### Advantageous Effects of Invention

According to the carbon dioxide liquefaction device related to the above aspects of the present invention, it is possible to attain a reduction in power consumption.

### Brief Description of Drawings

Fig. 1 is a diagram showing a schematic configuration of a carbon dioxide liquefaction device in an embodiment of the present invention.
Fig. 2 is a diagram showing the configuration of the carbon dioxide liquefaction device in the embodiment. Description of Embodiments

Hereinafter, a carbon dioxide liquefaction device according to an embodiment of the present invention will be described.

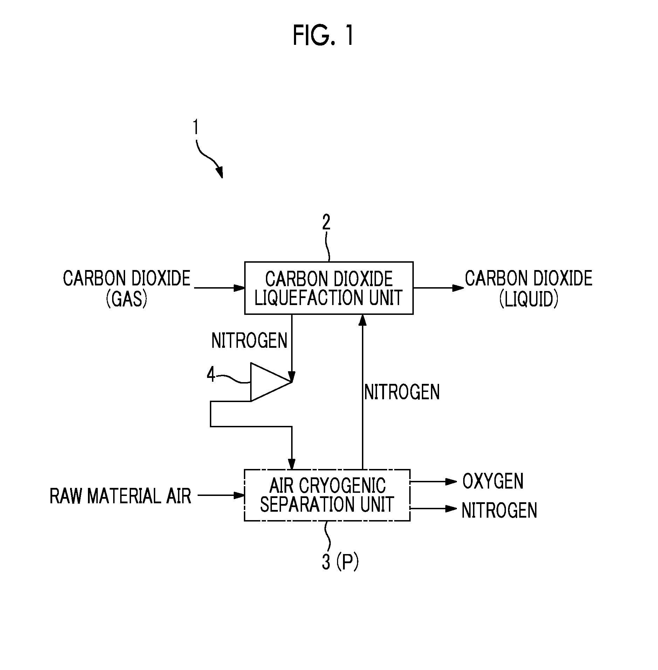

Fig. 1 shows the carbon dioxide liquefaction device of this embodiment.

A carbon dioxide liquefaction device 1 in this embodiment is provided in, for example, a plant such as a power generation plant which is provided with a coal gasification furnace and the like, or a gasification plant. In a producer gas or an exhaust gas of these plants, a large amount of carbon dioxide (CO2 gas) is contained. The plant of this embodiment has facilities which separate the carbon dioxide contained in the producer gas or the exhaust gas and change the carbon dioxide into a high-pressure state.

As shown in Fig. 1, the carbon dioxide liquefaction device 1 is provided with a carbon dioxide liquefaction unit 2 which liquefies the carbon dioxide by performing heat exchange with a portion of a cold heat source in a gaseous state, which is used and manufactured in a cold heat source production plant P, as a refrigerant. Carbon dioxide which is supplied to the carbon dioxide liquefaction unit 2 is supplied from a carbon dioxide separation and recovery device (not shown). The carbon dioxide separation and recovery device separates and recovers the carbon dioxide from, for example, a mixed gas in which the carbon dioxide is contained.

Here, in order to obtain the carbon dioxide in a high-pressure state described above, it is necessary to compress low-pressure carbon dioxide recovered in the carbon dioxide separation and recovery device to a high-pressure state. However, in a case of trying to compress the carbon dioxide in a gaseous state by a compressor, thereby making the carbon dioxide be in a high-pressure state, a large amount of power is required. For this reason, in the carbon dioxide liquefaction device 1 of this embodiment, after the pressure of the low-pressure gaseous carbon dioxide recovered in the carbon dioxide separation and recovery device is increased to a carbon dioxide liquefaction pressure by a gas compressor (not shown), the carbon dioxide is liquefied by the carbon dioxide liquefaction unit 2, and thereafter, the pressure of the liquefied carbon dioxide is increased to a high-pressure state by a booster pump (not shown). Due to this, it becomes possible to increase the pressure of the carbon dioxide with less power than that increasing pressure to a high-pressure state by a gas compressor. In addition, if the pressure of the carbon dioxide recovered in the carbon dioxide separation and recovery device is greater than or equal to the liquefaction pressure of the carbon dioxide, the gas compressor may be omitted.

The cold heat source production plant P is provided with an air cryogenic separation unit 3. The air cryogenic separation unit 3 cryogenically separates oxygen from raw material air which is a raw material gas. The oxygen cryogenically separated by the air cryogenic separation unit 3 is used for cooling liquefaction or the like of the raw material air and is then sent to an oxygen gas compressor (not shown) or the like, thereby being supplied to a gasification furnace, a boiler, or the like.

The air cryogenic separation unit 3 supplies cryogenically-separated low-temperature gaseous nitrogen which is used for the cooling of the raw material air, to the carbon dioxide liquefaction unit 2. The carbon dioxide liquefaction unit 2 performs heat exchange between the gaseous nitrogen which is supplied from the air cryogenic separation unit 3 and the gaseous carbon dioxide recovered in the carbon dioxide separation and recovery device.

The carbon dioxide liquefaction device 1 is further provided with a nitrogen gas expander 4. The nitrogen gas expander 4 expands the gaseous nitrogen having performed heat exchange with the carbon dioxide in the carbon dioxide liquefaction unit 2. Then, the nitrogen gas expander 4 recovers energy when expanding the gaseous nitrogen. The energy is used as, for example, power which operates a compressor for gaseous carbon dioxide compression (not shown) which is provided between the above-described separation device and the carbon dioxide liquefaction unit 2, or the like.

Here, the nitrogen gas expander 4 rapidly expands the gaseous nitrogen used as a cold heat source in the carbon dioxide liquefaction unit 2, thereby lowering the temperature of the gaseous nitrogen to the vicinity of a temperature before heat exchange is performed by the carbon dioxide liquefaction unit 2. The gaseous nitrogen with a temperature lowered by the nitrogen gas expander 4 is returned to the air cryogenic separation unit 3. The gaseous nitrogen is used as a cold heat source which cools the raw material air in a process of cryogenically separating the raw material air in the air cryogenic separation unit 3.

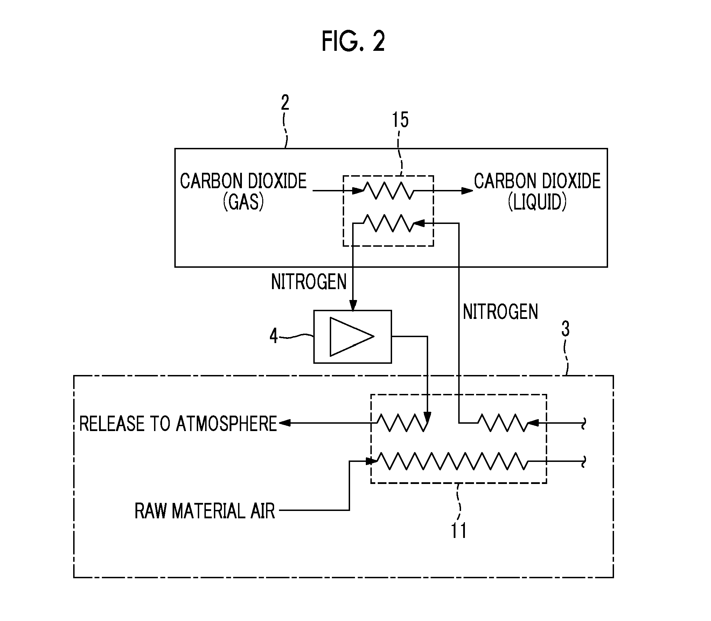

As shown in Fig. 2, the air cryogenic separation unit 3 is provided with a heat exchanger 11.

The heat exchanger 11 performs heat exchange with nitrogen or oxygen separated in the air cryogenic separation unit 3, air expanded by an air expander, or the like, as a cold heat source, in order to cool and liquefy the raw material air.

The air cryogenic separation unit 3 separates the raw material air cooled by the heat exchanger 11 into liquid oxygen, liquid nitrogen, gaseous nitrogen, gaseous oxygen, and the like. The oxygen is appropriately supplied to, for example, the heat exchanger 11, the above-described coal gasification furnace, a boiler, or the like. Further, the gaseous nitrogen is supplied to the carbon dioxide liquefaction unit 2 through the heat exchanger 11.

The carbon dioxide liquefaction unit 2 is provided with a carbon dioxide condenser 15 for cooling and liquefying gaseous carbon dioxide. To the carbon dioxide condenser 15, gaseous nitrogen is supplied as a cold heat source from the air cryogenic separation unit 3. The temperature of the gaseous nitrogen which is supplied to the carbon dioxide condenser 15 is set, for example, to be higher than a temperature at which the carbon dioxide is not solidified and lower than the liquefaction temperature of carbon dioxide. Liquid carbon dioxide liquefied by being heat-exchanged with liquid nitrogen in the carbon dioxide condenser 15 is supplied to a pressure-increasing system such as the booster pump (not shown) described above.

A pressure-increasing system (not shown) downstream of the carbon dioxide liquefaction unit 2 adjusts the temperature of liquid carbon dioxide such that a state which is desired in a process (not shown) downstream thereof is created, and then sends out the carbon dioxide to the downstream process.

The gaseous nitrogen having performed heat exchange with the raw material air by the heat exchanger 11 is released to the atmosphere by way of a further heat exchange process in an air cryogenic separation process, or used in another process.

Therefore, according to the carbon dioxide liquefaction device 1 of the above-described embodiment, it is possible to use gaseous nitrogen obtained by the air cryogenic separation unit 3 as a gaseous refrigerant (a cold heat source) for cooling raw material air. In addition, it is possible to recover energy when gaseous nitrogen after heat exchange with the carbon dioxide by the carbon dioxide liquefaction unit 2 is expanded by the nitrogen gas expander 4, and to lower the temperature of the gaseous nitrogen by expansion. In addition, it is possible to lower the temperature of gaseous nitrogen of an outlet of the nitrogen gas expander 4 to the extent of a temperature before the heat exchange with the carbon dioxide in the nitrogen gas expander 4, and if necessary in the air cryogenic separation unit 3. Further, it is possible to return the gaseous nitrogen with a lowered temperature to the air cryogenic separation unit 3, thereby using the gaseous nitrogen for various cooling of a raw material gas or the like, similar to a general air cryogenic separation unit in which heat exchange with the carbon dioxide is not performed.

As a result, it becomes possible to attain a reduction in the power consumption of the carbon dioxide liquefaction device 1. More specifically, it is possible to reduce power needed to liquefy the carbon dioxide, as compared to a case where a cold heat source which is used in the cooling and liquefaction of the carbon dioxide is made in, for example, a dedicated refrigerating system such as a propane refrigerating system.

In addition, the present invention is not limited to the above-described embodiment and includes forms in which various changes are applied to the above-described embodiment within a scope which does not depart from the gist of the present invention. That is, specific shapes, configurations, or the like mentioned in the embodiment are merely examples, and changes can be appropriately made.

For example, in the above-described embodiment, a case where energy which is obtained by the nitrogen gas expander 4 is used as power for operating a compressor for compressing gaseous carbon dioxide has been described as an example. However, there is no limitation to the above configuration and the energy may be used as the power of, for example, a compressor, a pump (not shown), or the like which is in an air separation device.

Further, in the above-described embodiment, a case where nitrogen is used as a cold heat source for the cooling of the carbon dioxide has been described as an example. However, there is no limitation to the above configuration, and, for example, separated oxygen may be used as a cold heat source for the cooling of the carbon dioxide. For example, in a case of cooling the carbon dioxide by liquid oxygen, similar to a case of using the above-described liquid nitrogen as a cold heat source, first, liquid oxygen is vaporized, and subsequently, the vaporized gaseous oxygen is heat-exchanged with the carbon dioxide by the carbon dioxide condenser 15.

In addition, gaseous oxygen after heat exchange with the carbon dioxide is expanded by an oxygen gas expander (equivalent to the nitrogen gas expander 4), and thereafter, the expanded gaseous oxygen is heat-exchanged with raw material air in the heat exchanger 11. Finally, the gaseous oxygen with a temperature increased by heat exchange with the raw material air is supplied to a gasification furnace or the like. In addition, in a case where the temperature of the gaseous oxygen which is supplied to the gasification furnace or the like is too low, heating may be performed by using a high-temperature gas which is discharged from a compressor 10 for compressing raw material air or a gas compressor (not shown), as a heating source.

An example in which nitrogen and oxygen are individually used as a cold heat source has been described. However, both nitrogen and oxygen may be used. In addition, as a cold heat source, mixed air obtained by mixing oxygen and nitrogen made in the air cryogenic separation unit 3 may be used, or the mixed air may be used appropriately in combination with nitrogen and oxygen. Even in a case of using the mixed air, similar to a case of using nitrogen and oxygen described above, the mixed air after heat exchange with the carbon dioxide is expanded by a gas expander for mixed air (equivalent to the nitrogen gas expander 4). Then, it is favorable if, at the same time as performing energy recover, the mixed air with a lowered temperature is sent to the heat exchanger 11, thereby being subjected to heat exchange.

In addition, in the above-described embodiment, a case where gaseous nitrogen produced by the air cryogenic separation unit 3 is supplied to the carbon dioxide liquefaction unit 2 through the heat exchanger 11 has been described. However, the gaseous nitrogen may be supplied to the carbon dioxide liquefaction unit 2 without passing through the heat exchanger 11.

Further, in the above-described embodiment, a case where the nitrogen gas expander 4 is provided by only one stage between the carbon dioxide liquefaction unit 2 and the air cryogenic separation unit 3 has been described as an example. However, the number of stages of the nitrogen gas expander 4 may be set to be a plurality of stages according to the pressure of gaseous nitrogen vaporized by a vaporizer 14. More specifically, a plurality of sets of combinations of the nitrogen gas expander 4 and the carbon dioxide condenser 15 may be provided to be connected in series. In this case, gaseous nitrogen expanded by the nitrogen gas expander 4 of the most-upstream first stage is heat-exchanged with the carbon dioxide in the carbon dioxide condenser 15 again and is then expanded by the nitrogen gas expander 4 of a second stage again. Then, the gaseous nitrogen expanded by the nitrogen gas expander 4 of the second stage is supplied to the heat exchanger 11. In a case where the nitrogen gas expanders 4 of a third or more stages are provided, the above process is repeated. In addition, the same applies to a case of using the above-described oxygen or mixed gas as a cold heat source.

In addition, in the above-described embodiment, a case where the gaseous nitrogen expanded by the nitrogen gas expander 4 is subjected to heat exchange in the heat exchanger 11 and is then released to the atmosphere or used in another plant has been described. However, the gaseous nitrogen may be heat-exchanged with high-temperature carbon dioxide which is discharged from a low-pressure gas compressor or high-temperature raw material air which is discharged from a compressor (not shown).

Further, in the above-described embodiment, a case where the cold heat source production plant P is provided with the air cryogenic separation unit 3 which produces a cold heat source has been described. However, there is no limitation thereto. That is, a cold heat source may be produced by methods other than air separation.

In addition, in the above-described embodiment, the carbon dioxide liquefaction device 1 provided in a plant such as a power generation plant which is provided with an oxygen-blown coal gasification furnace and performs combined power generation has been described as an example. However, there is no limitation thereto. For example, if it is a plant which is provided with the cold heat source production plant P and discharges the carbon dioxide, it is possible to apply the carbon dioxide liquefaction device according to the present invention thereto.

Further, in the above-described embodiment, the carbon dioxide liquefaction device 1 which is used in the middle of a process of producing the carbon dioxide in a high-pressure state has been described as an example. However, the carbon dioxide liquefaction device according to the present invention is not limited to the production of liquid carbon dioxide in a process of making the carbon dioxide be in a high-pressure state. The present invention can also be applied to a carbon dioxide liquefaction device or the like having the final purpose of manufacturing liquid carbon dioxide.

### Industrial Applicability

The present invention can be applied to a carbon dioxide liquefaction device which is provided with a carbon dioxide liquefaction unit which liquefies carbon dioxide by performing heat exchange between a gaseous refrigerant which is sent out from a cold heat source production unit and the carbon dioxide.

### Reference Signs List

1: carbon dioxide liquefaction device
2: carbon dioxide liquefaction unit
3: air cryogenic separation unit
4: nitrogen gas expander
11: heat exchanger
15: carbon dioxide condenser

## Claims

1. A carbon dioxide liquefaction device comprising:
a carbon dioxide liquefaction unit which liquefies carbon dioxide separated and recovered from a gas containing carbon dioxide, by performing heat exchange with a portion of a cold heat source in a gaseous state, which is used and manufactured in a cold heat source production plant, as a refrigerant; and
an energy recovery unit which expands a gaseous refrigerant having performed heat exchange with the carbon dioxide in the carbon dioxide liquefaction unit, thereby extracting energy and at the same time, lowering a temperature of the gaseous refrigerant,
wherein the energy recovery unit returns the gaseous refrigerant having a lowered temperature to the cold heat source production plant.

2. The carbon dioxide liquefaction device according to Claim 1, wherein the energy recovery unit lowers the temperature of the gaseous refrigerant to a temperature needed in order to use the gaseous refrigerant in the cold heat source production plant.

3. The carbon dioxide liquefaction device according to Claim 1 or 2, wherein the cold heat source production plant is provided with an air cryogenic separation unit which can separate raw material air into at least oxygen and nitrogen.

4. The carbon dioxide liquefaction device according to Claim 3, wherein the air cryogenic separation unit is provided with a heat exchange unit which performs heat exchange by using the gaseous refrigerant having a temperature lowered by the energy recovery unit.

5. The carbon dioxide liquefaction device according to Claim 4, wherein a plurality of sets of combinations of the energy recovery unit and the heat exchange unit are provided to be connected in series.
